# EUROPEAN PATENT SPECIFICATION

(11) **EP 1 377 153 B1**
(45) Date of publication and mention of the grant of the patent: **26.01.2005**
(21) Application number: 02720677.0
(22) Date of filing: 08.04.2002
(51) Int. Cl.: A01G 1/06

(54) **DEVICE FOR THE MECHANICAL SEPARATION OF CUTTINGS FROM A PLANT BRANCH**
VORRICHTUNG ZUR MEKANISCHEN ABTRENNUNG VON STECKLINGEN VON EINEM PFLANZENZWEIG
DISPOSITIF DE SEPARATION MECANIQUE DE BOUTURES A PARTIR D'UNE BRANCHE VEGETALE

(30) Priority: 09.04.2001 NL 1017794
(43) Date of publication of application: 07.01.2004
(73) Proprietor: Rombomatic B.V., 5527 JT Hapert (NL)
(72) Inventor: ROMBOUTS, Norbert, Johan, Leonard, NL-5527 JT Hapert (NL); ROMBOUTS, Peter, Karel, Maria, NL-5527 GL Hapert (NL)
(74) Representative: Timmers, Cornelis Herman Johannes
(86) International application number: PCT/NL2002/000226
(87) International publication number: WO 2002/080657

(56) References cited:
- EP-A- 0 374 063
- EP-A- 0 853 873
- PATENT ABSTRACTS OF JAPAN vol. 1997, no. 05, 30 May 1997 (1997-05-30) -& JP 09 023748 A (ISEKI &CO LTD), 28 January 1997 (1997-01-28)

## Description

The invention relates to a device for the mechanical separation of cuttings from a plant branch, comprising:
a carrier for the branch which is to be processed,
a conveyor track, which interacts therewith, for presenting a branch which is supported by a carrier to:
   an imaging unit (VISION) for determining the position of an axil with side branch of a presented branch with respect to a reference and passing this position-representative information to
   a separation device for separating a cutting by cutting through the branch at a predetermined distance from the axil and releasing the cutting which has been separated in this way at a predetermined position.

A device of this type is known per se for NL 1004687 and EP 0853873, both in the name of the present Applicant.

This known device - which is designed in particular to separate cuttings from rose branches - achieves good results, in particular with regard to the assessing of the supplied branches which are to be processed and cutting or snipping through the branch at the correct location in order to obtain the cuttings, while also achieving a satisfactory production rate. This device has demonstrated that it is technically possible to replace the manual separation of cuttings by mechanical separation. The device which is described in the abovementioned publications, having a circulating conveyor track for presenting the branches which are to be processed to the VISION installation and to at least one cutting device has the drawback that it is not easy to increase the production capacity of an existing device. If a company needs to expand its production capacity, it has no other option but to procure a second device of the same type, complete with conveyor track and associated supply and discharge devices. Furthermore, the device takes up a relatively large amount of floor space.

It is an object of the invention to overcome these drawbacks and to provide a device of the type mentioned in the preamble which, on account of its design, is eminently suitable to be produced not only in modular form but also in a considerably more compact version than the known device. According to the invention, this object is achieved by the fact that the conveyor track is a finite track, with, as its starting point, the location where the branch is presented to the carrier and, as its end point, the location where the branch is assessed by the VISION installation, and the separation device, which is controlled on the basis of the information supplied by the VISION installation, comprises a reduction and clamping mechanism, which can be adjusted in both a vertical plane and a horizontal plane and separates the assessed branch initially at a lower level with respect to the axil and then at an upper level with respect to the axil.

The design which is proposed according to the invention, with one or more finite branch conveyor tracks which start from a central point and along which a reciprocating movement is executed results in a compact device which is easy to adapt to current production demands and allows a high hourly production rate to be achieved while employing a conveniently arranged design.

Advantageous preferred embodiments of the invention are described in the subclaims. The measures described in claims 2-4 result in a particularly compact structure; the design of supply and discharge track with the associated branch supporting means described in claims 5-7 leads to an efficient supply, which is easy to operate and feed, of the branches which are to be processed. The measures described in claims 8 and 9 reduce the risk of damage to the branches which are to be processed. Claims 10-13 describe measures which result in an efficient, reliably operating reduction mechanism.

The invention is explained with reference to the drawing, in which:
Fig. 1 shows a front view of an embodiment of the device according to the invention;
Fig. 2 shows an end view thereof;
Fig. 3 shows a plan view thereof; and
Fig. 4 shows a perspective illustration thereof;
Fig. 5 diagrammatically depicts a number of supply supporting means in combination with the conical protective cap;
Fig. 6a-6d diagrammatically depict the various phases of the movement process thereof;
Fig. 7 shows a perspective view of the effects of the conical protective cap used;
Fig. 8a-8e diagrammatically depict the various phases of the movement pattern of a supply supporting means interacting with an altered embodiment of the protective cap mechanism.
Fig. 9 shows a perspective front view of the preferred embodiment of the reduction mechanism;
Fig. 10a-10d show plan and side views thereof;
Fig. 11 diagrammatically depicts a plan view of a large installation composed of four devices according to the invention.

The figures show an embodiment of the device according to the invention with two conveyor tracks which diverge from one common point and the respective end points of which define VISION assessment and cutting separation positions.

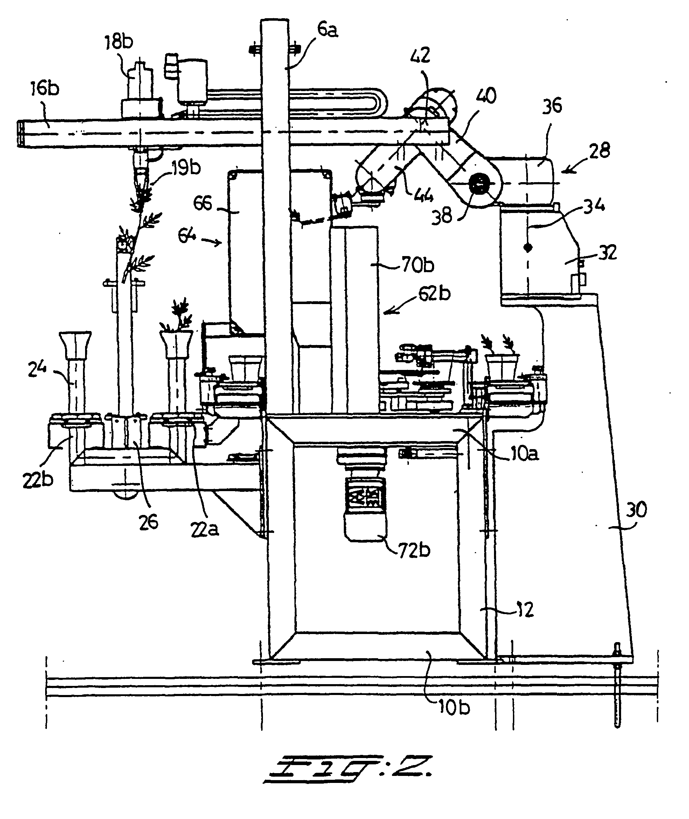

In fact, the device shown is a module which can operate as an independent unit but of which it is also possible for a number to be positioned adjacent to one another, to which the branches which are to be processed are supplied by a common branch supply track, all this as will be described in more detail below. The module which is illustrated, denoted overall by reference numeral 2, comprises a frame 4 with uprights 6a, 6b which are positioned at a distance from one another and transverse bars 8a, 8b, and in combination with (cf Fig. 2) a square, open supporting frame which lies behind it and has horizontal struts 10a and 10b and uprights 12.

The top bar 8a, bears via the two columns 14a, 14b the two conveyor tracks 16a, 16b, which diverge from the common front end 18. Each conveyor track 16a, 16b guides a branch carrier assembly 18a, 18b, in each case provided with a drive motor, which is not shown in detail in the figures, can be actuated in two directions and drives a toothed pinion which engages in the rack 20a, 20b of the corresponding conveyor track 16a, 16b. In this way, a branch which is carried by a branch carrier assembly 18a, 18b via a controllable gripper 19a, 19b can be displaced in a controlled manner from the front end 18, along the associated conveyor track, until it reaches the assessment and separation position, after which the carrier assembly, following processing of the branch, returns to the starting position.

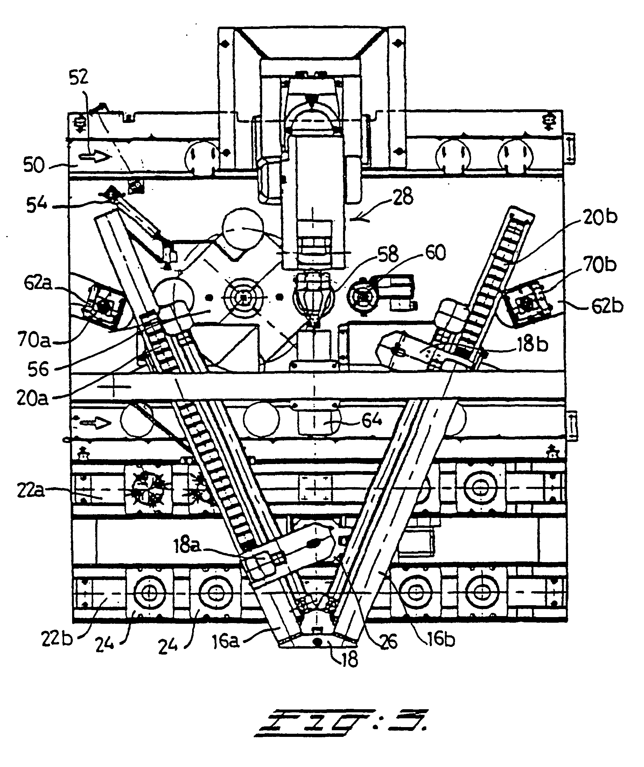

The device is provided with a supply track for the branches which are to be treated, this track comprising two horizontal sub-tracks 22a, 22b which run along the front side of the device and along which individual cylindrical, vase-shaped branch-supporting elements 24, which will be described in more detail below, move. Respective supporting means which are filled with a branch are supplied along the innermost track 22a and, at the location of the intersection of the two conveyor tracks 16a, 16b, are displaced transversely thereto, each branch-supporting element which is filled with a branch which is to be processed coming to a standstill in a position which is denoted by 26 in Fig. 2 and 3; this is the position in which a branch carrier, which can be displaced along one of the conveyor tracks 16a, 16b, using the two-part gripper 19a or 19b, respectively, can remove a branch from the corresponding support element. The empty supports are then discharged along the track 22b.

The task of separating individual cuttings from a supplied branch is carried out by a handling robot with gripping and separation elements at the handling end, which robot is denoted overall, in Fig. 2 and 3, by 28. A robot 28 of this type is commercially available. The robot 28 is carried by a support frame 30 in which the control electronics are accommodated; the housing 32 of the robot bears the first arm 36, which can rotate in a controlled manner about the vertical axis 34 and at the end bears the horizontal shaft 38, about which the second arm 40 can rotate, once again in a controlled manner; the end arm 44 is arranged at the end of this second arm, in such a manner that it can be rotated in a controlled manner about the second horizontal shaft 42. At its lower end, this end arm bears a separation mechanism 44 which, in the design shown, is a cutting mechanism which will be described in more detail below. Obviously, any suitable separation mechanism is possible.

The robot 28 with the separation mechanism 44 is responsible for separating cuttings from a supplied branch which is to be processed, for example a rose branch, at the correct height and placing in each case a predetermined number of the separated cuttings onto a suitable location in a pot which can then be discharged in a controlled manner. The empty pots are supplied on a supply track 50 in the direction of the arrow 52. One by one, they are transferred, by a suitable transfer mechanism 54, to the turntable 56, and in this way each empty pot moves successively into the correct position - corresponding to the position 58 - with respect to the robot mechanism, so that a cutting which has been separated by the separation mechanism can be placed into this pot. If appropriate, each cutting which has been gripped and separated by the robot mechanism may also, before being deposited in the position 58, have its end dipped into a disinfectant present in the container 60.

However: as is the case in the device according to the prior art, this controlled cutting and depositing of cuttings from a supply branch can only take place after the latter has been assessed with the aid of a VISION installation, which is known per se. In the embodiment shown, there are two VISION installations of this type, denoted by 62a, 62b; they interact with a common illumination unit 64 which radiates on two sides. This is in fact a light box which emits in two opposite directions and has two illumination surfaces, of which one, 66, can be seen in Fig. 2.

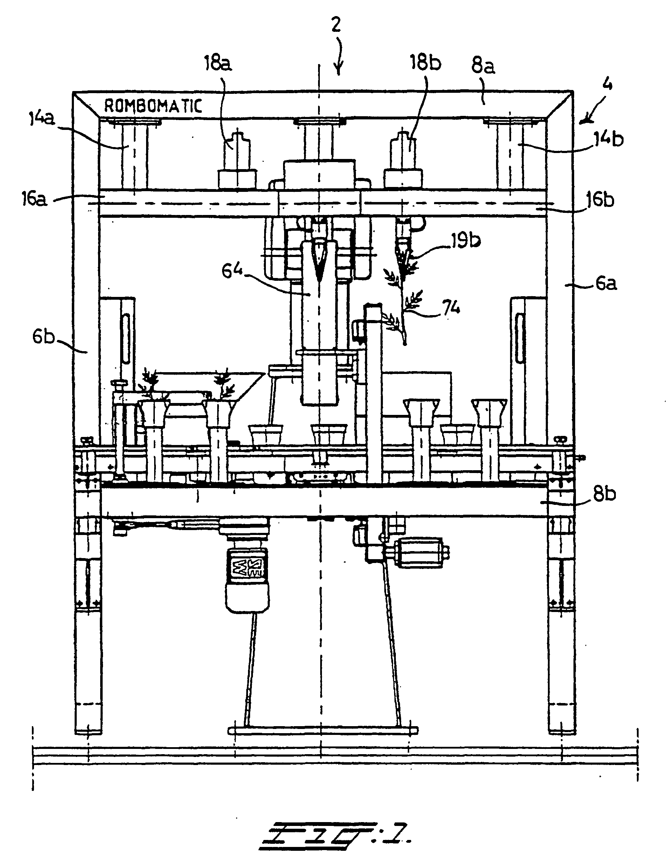

In the assessment position, which virtually corresponds to the limit position of a branch carrier 18a, 18b, each branch which is to be assessed, along the associated track 16a, 16b, hangs between an illumination surface 66 of the light box 64 and the optical input opening of a VISION installation 62a, 62b. In Fig. 3, therefore, this is the position of the branch carrier 18b. Each VISION installation 62a, 62b comprises a prismatic, upright housing 70a, 70b; the actual assessment mechanism (optical and light-sensitive element) is located at the bottom of this housing (as indicated by 72b in Fig. 2), and the image of the branch which is to be assessed - such as the branch 74 in Fig. 1 - is fed to this assessment mechanism via the input opening in the prism-shaped housing 70a, 70b via a system of mirrors and lenses (not shown in more detail). This double structure of the VISION section, with the vulnerable optical components in the space beneath the frame, on the one hand results in rapid assessment of the supplied branches, yet on the other hand ensures that the VISION installation, in the actual processing area, takes up as little space as possible, does not become soiled and is not in the way. VISION installations and the associated software are known per se.

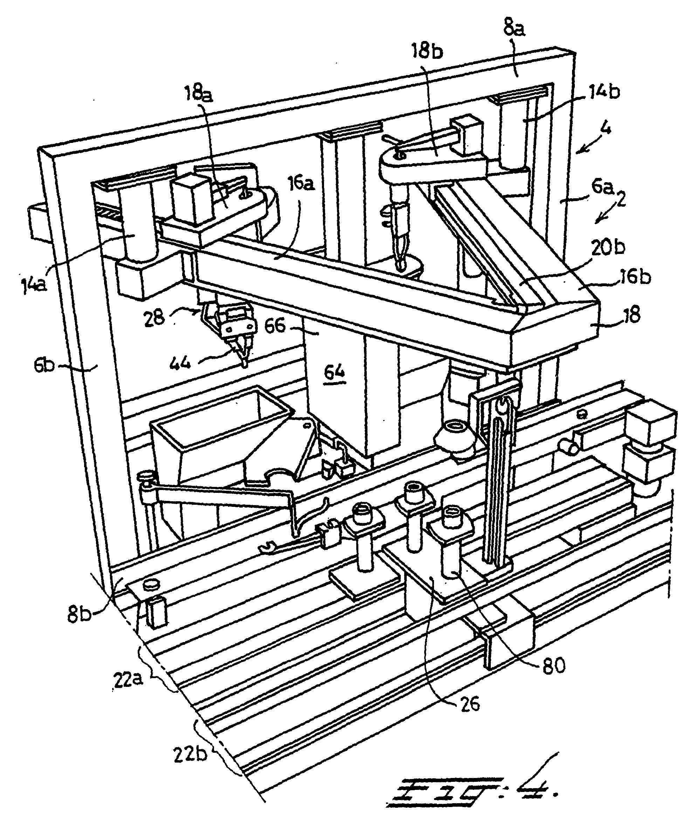

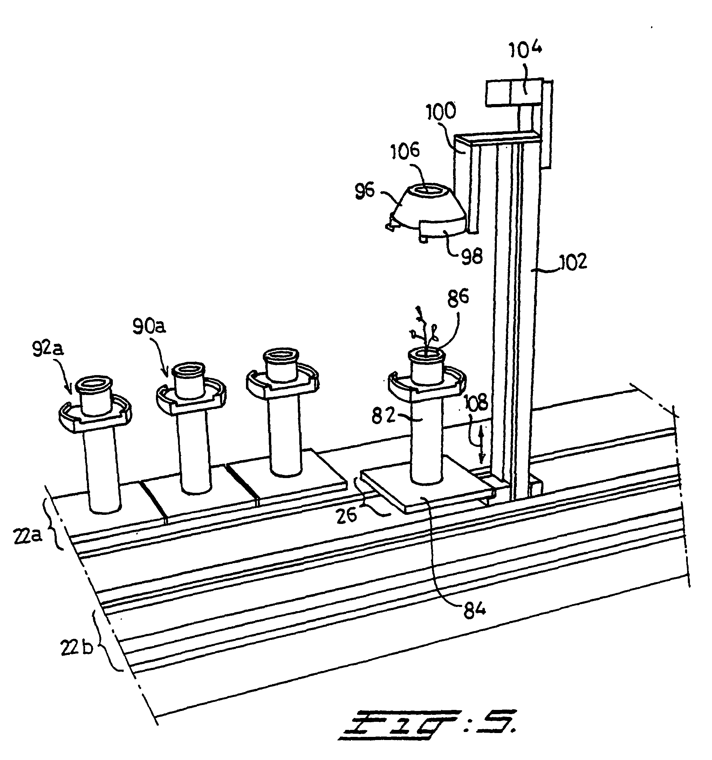

While the device is operating, the branches supplied are removed one by one from a supply supporting means, which has come to a standstill in the position 26 - and which may be designed as the supply vase 80, which is shown in Fig. 4 and 5 and will be described in more detail below - by one of the branch carriers 18a or 18b, which can be moved in a controlled and reciprocating manner along the tracks 16a, 16b, specifically by grippers 19a or 19b, respectively, thereof, and can then be moved via one of the tracks into the final assessment position (such as the position shown in Fig. 3 for the branch carrier 18b); then, each branch is assessed in the manner which is known from the prior art, by being rotated in front of the VISION installation. If the branch is deemed to be of insufficient quality, the branch carrier (18a, or 18b) moves further towards the end of the track, where the branch is released by the gripper above a suitable collection hopper; if the branch is suitable for further processing, first of all the cutting and gripping unit 58 separates the bottom section of the branch, and then one or more cuttings are separated at various levels. The VISION mechanism may in this case carry out a one-off assessment and, on this basis, supply data relating to the height and location where the cutting must take place; however, it is also possible to carry out a new assessment after each separation step. As will be explained below, during each separation operation the cutting which has been separated, on account of the specific design of the cutting mechanism, which will be described below, remains clamped to this mechanism, so that the cutting can be deposited in the desired position. If appropriate, it is possible for the end of each cutting first of all to be dipped into the container 60 holding disinfectant, and for the cutting then to be deposited in a pot which has been provided on the table 60.

Obviously, in a device such as the present device, it is important for the branches which are supplied to the device and are to be processed by the device to be offered to the VISION assessment mechanism and then to the cutting mechanism in such a manner that the branch is gripped at or close to the highest point and not at one or more side branches, since only then is it under all circumstances ensured that the branch offered is assessed in the correct way and is appropriately divided into cuttings. To this end, a preferred embodiment of the invention makes use, for supplying the branches, of the very specific cylindrical branch supply vases, which have already been mentioned briefly above, in combination with a matching protective cap, all this as will be explained in Fig. 5, 6a-6d and 7.

Each branch supply vase 80 comprises a vase body 82, fixed to a square base plate 84 which interacts with the supply and discharge track 22a and 22b, respectively, and ends in a collar 86 at the top side; at a defined distance (d) below the top edge 86a of the collar 86, the vase body 82 bears a support plate 88 with rounded ends 90a, 90b, and upright supporting edges or projections 92a, 92b at the location of these ends. This support plate 88 interacts with a conical protective cap 96 which, at the location of the transfer position 26, is supported by a fixed horseshoe-shaped support 98, fixed to the fixed pillar 102 via the bracket 100, which fixed pillar 102 also, at a short distance above this, bears an infrared position detector 104 which can be used to detect the top end of a branch. The top opening 106 of the cap 96 fits with a certain clearance around the outer edge of the collar 86, and the diameter of the circular bottom edge 102 of the cap fits just inside the projections 90a, 90b, 79a, 79b.

In the transfer position 26, i.e. the position in which a branch which is present in a supply vase 80 and is to be divided into the cuttings is to be transferred from the supply vase by one of the grippers 27a or 27b, a supply vase, such as the vase 80, rests, by means of the base plate 84, on a lifting plate 106 which can be moved up and down in a controlled manner in the direction indicated by the arrows 108 by a suitable drive mechanism (not shown in more detail).

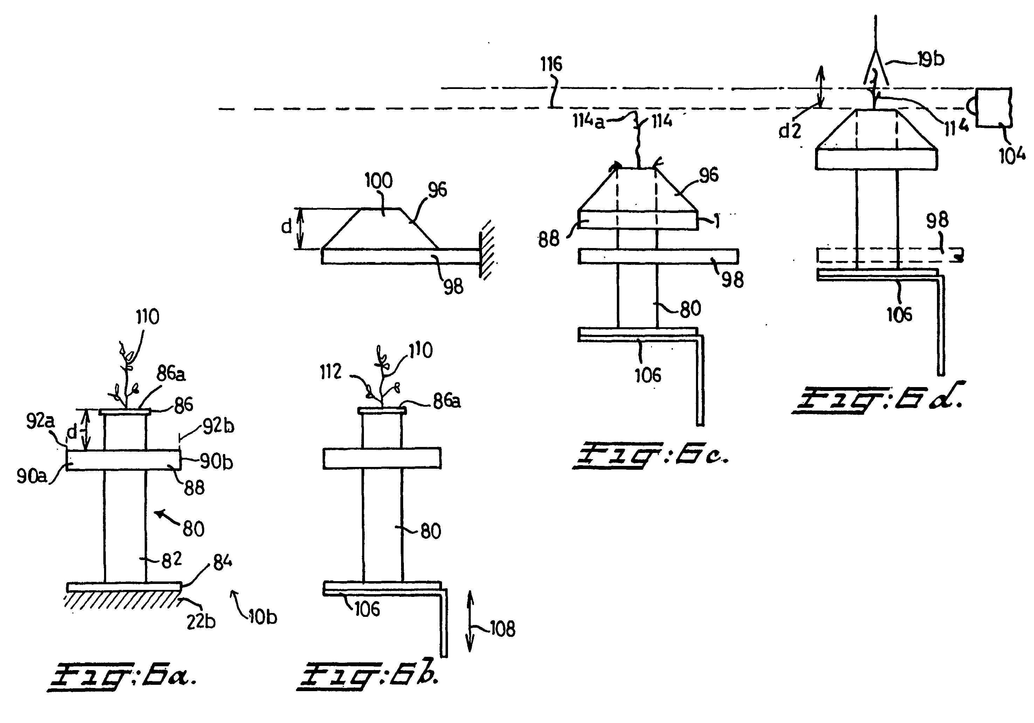

The way in which this assembly operates will be explained with reference to Fig. 6a -6d.

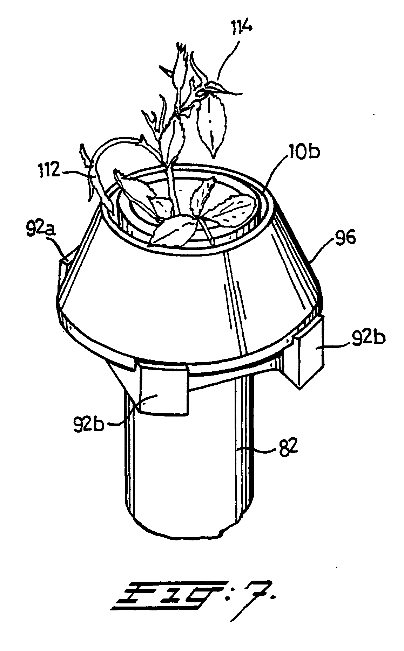

Fig. 6a shows the situation in which the supply vase 80 with the base plate 84 is still resting on the supply track 22b; Fig. 6b shows the situation at the location of the transfer position 26, where the supply vase 80 is standing under the cap 100, which is resting on the fixed, horseshoe-shaped support 98; the branch 110 which has been placed into the vase 80 is projecting freely, with protruding side branches 112, from the top end 86a of the vase 80. This then results in the situation shown in Fig. 6c; the lifting plate 106, which has been moved upwards in the direction indicated by the arrows 108, moves the supply vase 80 upwards until the support plate 88 is bearing against the bottom edge 102 of the conical cap 96. This results in the situation shown in Fig. 7: the side branches 112 of the branch 110 supplied have been pushed away and are partially trapped between the collar 86 of the vase-shaped supply member 80 and the boundary of the top opening 100 of the conical cap, and only the top end 114 of the supplied branch is still projecting upwards. The lifting movement is then continued, in a controlled manner, until the top 114a of the end 114 of the branch 110 crosses the detection level of the infrared position detector 104, which is indicated by the dashed line 116; this detector then emits an activation signal, which controls the lifting movement of the plate 106 in such a manner that this plate moves a predetermined distance d2 onwards and then stops. This is the situation illustrated in Fig. 6d, in which the end 114 of the branch 110 lies at a level which is such that reliable gripping by the gripper 19b is ensured.

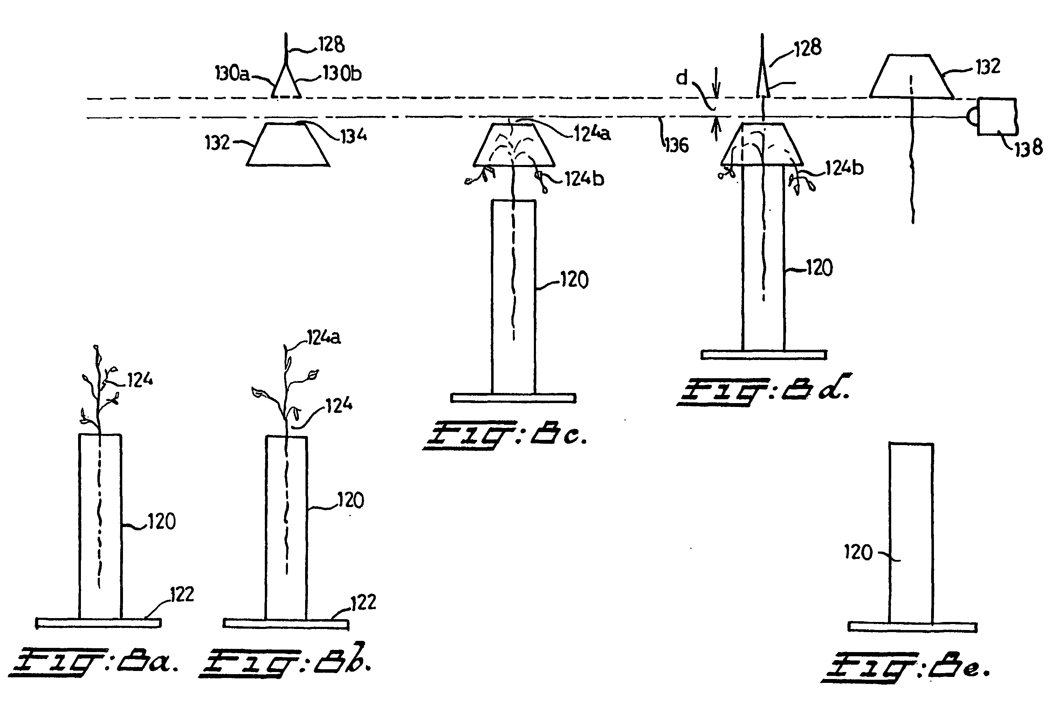

As has been shown in practice, the embodiment described above, works very well for branches of small to medium dimensions, but has drawbacks when processing long branches, on account of the fact that the position of the cap 100 is spatially defined; the cap is always located above the transfer position 26, and a long branch is therefore pulled away obliquely, which could cause damage. This drawback is overcome in the embodiment which is diagrammatically illustrated in Fig. 8a-8e, in which the protective cap does not have a fixed position, but rather is secured to the gripper mechanism in such a manner that it can be displaced in the vertical direction. This makes it possible to make use of supply vases without the supporting element 88 for the caps 100 which is required in the embodiment described above; however, the design then becomes slightly more complicated.

Fig. 8a shows a cylindrical vase-like supply supporting element 120, resting on the base plate 122 of the type described above. The figure shows how a relatively long branch 124, the processing of which using the embodiment described above could cause problems, is fitted into this supply vase 120.

Fig. 8b shows the position of the supply vase 120 at the transfer position 26, located beneath the gripper 128 with gripper jaws 130a, 130b. The conical protective cap 132, which can be moved vertically up and down in a controlled manner and the top passage 134 of which is sufficiently large for the gripper 130a, 130b to be able to pass through it, is coupled to the gripper carrier 28. As shown in Fig. 7c, the supply vase 120 is lifted upwards until the top end 124a reaches the detection level 136 of the infrared detection device 138; side branches 124b are now trapped inside the space of the cap 132.

The activation signal which is emitted by the infrared detection device 138 then causes the vase 120 to be moved further upwards over the short distance d, after which the gripper 128 with jaws 130a, 130b grips the top end 124a of the branch 124. This situation is shown in Fig. 8e, in which the vase 120 has returned to its lowered starting position, the branch 124 has been securely gripped and the cap 132 has been moved further upwards, past the gripper 128, so that the branch can be presented to the VISION installation without obstacles.

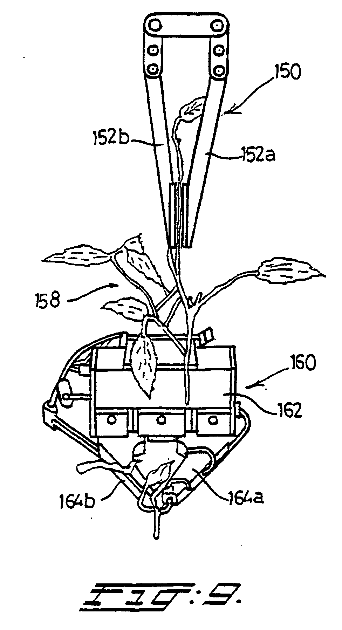

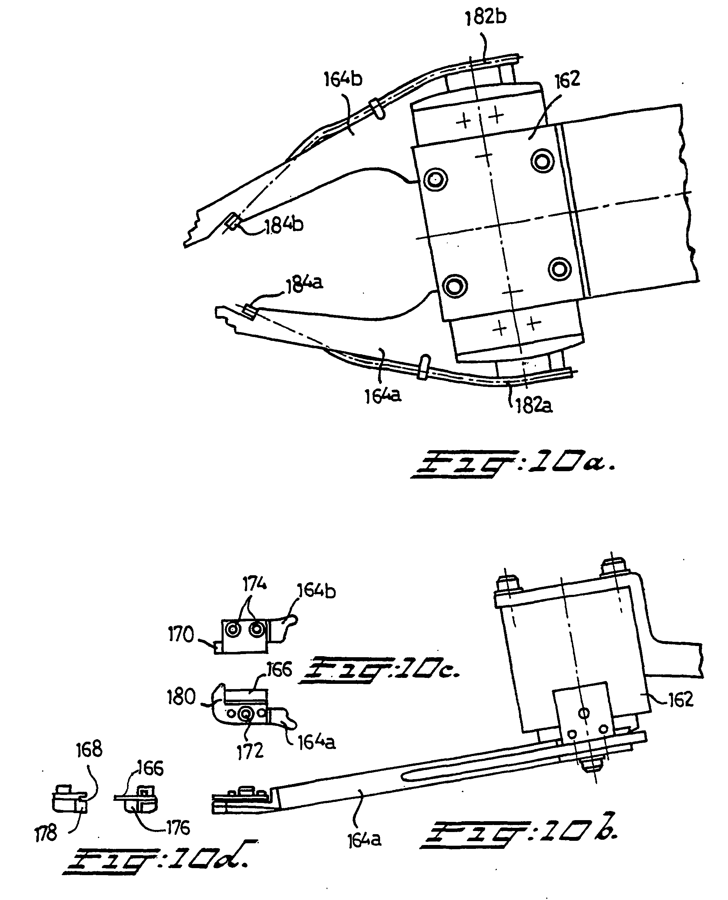

A preferred embodiment of the separation mechanism is shown in Fig. 9 and Fig. 10a-10d. Fig. 9 shows a perspective front view of a separation mechanism, which is designed as a cutting device, and also of the gripper mechanism 150 with the two gripper arms 150a, 150b. The drive for these arms is not shown - it may be designed in any suitable way. The top end 156 of the branch 158, from which the successive cuttings are separated by means of the cutting mechanism 160 which is present beneath the gripper, is clamped between the pressure-exerting pieces 154a, 154b. The cutting mechanism comprises the drive unit 162, which drives the two arms 164a, 164b, at the ends of which the cutting mechanism is located.

Fig. 10a shows a plan view of this assembly, including the drive unit 162 which can drive the two arms 164a, 164b both in terms of their angular position with respect to the drive unit and in terms of their angular position with respect to one another; Fig. 10b shows a side view thereof, with a section of the cutting elements at the end of the arm 164a. Fig. 10c shows the interacting parts of the cutting mechanism, illustrated at a distance from one another for the sake of clarity. It will be clear that those parts of the arms 164a, 164b which are shown in Fig. 10c are in fact continuations of the left-hand part of the arms as shown in Fig. 10a.

At the end, arm 164a bears a cutting blade 166; the abutment 170 thereof, which is provided with a receiving groove 168, is fixed to the end of arm 164b. The parts are secured by the screw 172 for the blade 166 and the screws 174 for the abutment 168. Beneath the blade 166 and the abutment 168, there is a pressure-exerting piece 176 and 178, which is made from a slightly elastic material, and between these pressure-exerting pieces 176, 178 a branch which is cut through by the cutting blade 166 is held securely clamped, so that with the aid of the positioning mechanism the cutting which has been separated can continue to be manipulated, for example - as has already been stated - can have its end dipped into a disinfectant and can then be deposited in a pot in a defined position.

The projecting point 180 at the end of the arm 164a and next to the cutting blade 166 is worth mentioning: during cutting, this point penetrates into the axil, ensuring unambiguous positioning of the branch while it is being processed.

Fig. 10a and 10b shows the two compressed-air ducts 182a, 182b ending in the nozzles 184a, 184b: in this way, the cutting mechanism can be cleaned using a short blast of compressed air.

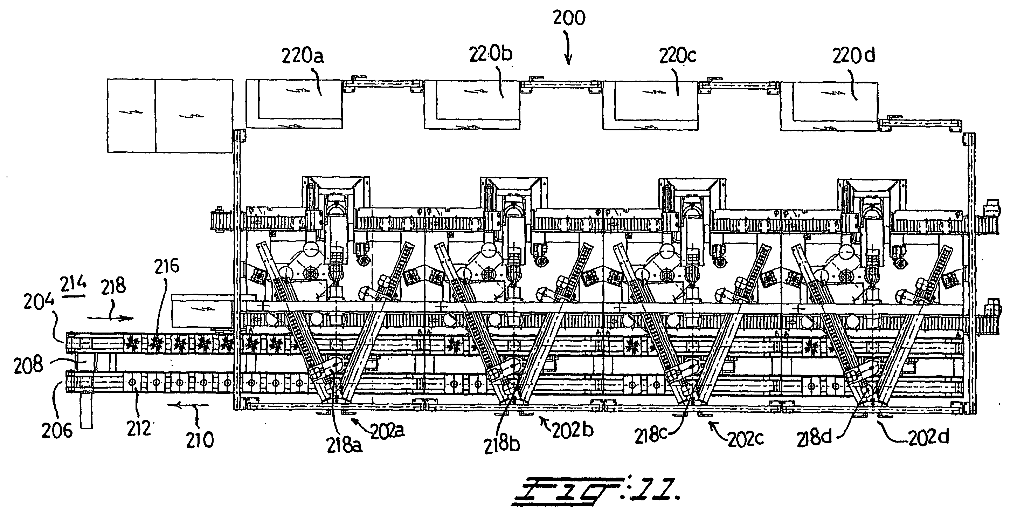

As has been stated in the introduction to the description, one of the advantages of the device according to the invention is the possibility of a modular structure, in which each module can function as an independent unit but in which the user can at any time - when a higher production capacity is desired - add one or more modules of the same type. Fig. 11 illustrates this using a plan view of a complete installation, in this case denoted overall by reference numeral 200 and composed of four identical modules 202a, 202b, 202c and 202d. The entire installation interacts with a supply track 204 for supply vases filled with branches and a discharge track 206 for returning empty vases. Supply track 204 and return track 206 are connected by a short transfer piece 208; the returned empty vases, moving in the direction indicated by the arrow 210, one of which vases is indicated by 212, are each provided, at the location of the filling position 214, with a branch which is to be processed and, as filled vases 216, move in the direction indicated by the arrow 218 towards the modules 202a-202d. In each module, the branch is removed and processed as described above at the respective transfer positions 218a-218d.

As shown in the figure, each module 202a-202d has its own power supply and control electronics 220a-220d and is therefore fully self-supporting; failure of one of the modules obviously results in a fall in overall production, but will never be able to cause the entire device to fail.

## Claims

1. Device for the mechanical separation of cuttings from a (plant) branch, comprising:
a carrier (18a,18b) for the branch which is to be processed,
a conveyor track (16a,16b), which interacts therewith, for presenting a branch which is supported by a carrier (18a,18b) to:
an imaging unit VISION (62a,62b) for determining the position of an axil with side branch of a presented branch with respect to a reference and passing this position-representative information to
a separation device (28) for separating a cutting by cutting through the branch at a predetermined distance from the axil and releasing the cutting which has been separated in this way at a predetermined position,
**characterized in that**
the conveyor track (16a,16b) is a finite track, with, as its starting point, the location where the branch is presented to the carrier (18a,18b) and, as its end point, the location where the branch is assessed by the VISION installation (62a,62b).
and the separation device (28), which is controlled on the basis of the information supplied by the VISION installation (62a,62b), comprises a reduction and clamping mechanism (44), which can be adjusted in both a vertical plane and a horizontal plane and separates the assessed branch initially at a lower level with respect to the axil and then at an upper level with respect to the axil.

2. Device according to claim 1, **characterized by** two diverging conveyor tracks, of which the respective starting points coincide and of which the end points define VISION assessment and cutting position.

3. Device according to claim 2, **characterized in that** each assessment position is combined with a dedicated VISION installation.

4. Device according to claim 3, **characterized by** a two-sided illumination station arranged between the assessment positions.

5. Device according to claims 2-4, **characterized by** a supply track, which runs in front of the conveyor track or tracks, for individual branch supports bearing branches which are to be processed, and a discharge track, which is substantially parallel thereto, for empty branch supports, which tracks are connected to one another by a transfer track at the location of the offering position.

6. Device according to claims 1-5, **characterized in that** a branch support is formed by a vase-shaped receptacle, into which a branch which is to be processed can be fitted, and provided with means for coupling it to the supply/discharge track and transfer track.

7. Device according to claim 6, **characterized in that** each vase-shaped receptacle is supported by a base plate which can be guided on the respective track.

8. Device according to claims 6-7, **characterized in that** each receptacle is provided, at a distance below its bottom edge, with a supporting means for the bottom edge of a protective cap which widens in the downward direction, resting, at the location of the offering position, on a fixed supporting means, in which offering position a receptacle base plate rests on a lifting element which can be moved up and down in a controlled manner and by means of which the top end of the receptacle can be moved into the protective cap.

9. Device according to claims 6-7, **characterized in that** each branch carrier bears a protective cap which can be moved up and down in a controlled manner, is coaxial with the gripper axis and in its lowest position interacts with the top end of a vase-shaped receptacle which is situated in the offering position.

10. Device according to claims 1-9, **characterized in that** the reduction mechanism is arranged on the first vertically adjustable end of a bearing arm, the second end of which can be angularly adjusted, about a substantially vertical axis, with respect to a reference.

11. Device according to claim 2, **characterized in that** longitudinal position of the bearing arm is adjustable.

12. Device according to claim 10-11, **characterized in that** the reduction mechanism comprises two converging arms which can be adjusted both in terms of their angular position with respect to one another and in terms of their angular position about a horizontal axis, with, at the end of one arm, a cutting element and, at the end of the other arm, an abutment which interacts therewith.

13. Device according to claim 12, **characterized by** a pointed centring projection which is arranged at the end of the arm which bears the cutting element and is at right angles to the cutting edge thereof.

## Patentansprüche

1. Vorrichtung zur mechanischen Abtrennung von Stecklingen von einem (Pflanzen)-zweig, umfassend:
einen Träger (18a, 18b) für den zu bearbeitenden Zweig,
eine mit diesem zusammenwirkende Transportbahn (16a, 16b) zum Zuführen eines durch einen Träger (18a, 18b) unterstützten Zweigs an eine bildgebende Einheit VISION (62a, 62b) zur Ermittlung der Position einer Achsel mit Seitenzweig eines zugeführten Zweigs im Verhältnis zu einem Bezugspunkt und zur Übermittlung dieser hinsichtlich der Position aussagekräftigen Information an
eine Trennvorrichtung (28) zur Abtrennung eines Stecklings durch Durchtrennen des Zweiges in einem bestimmten Abstand zur Achsel und zur Freigabe des derart abgetrennten Stecklings in einer bestimmten Position,
**dadurch gekennzeichnet,**
**dass** die Transportbahn (16a, 16b) eine begrenzte Bahn ist, deren Ausgangspunkt durch die Stelle gebildet wird, an der der Zweig dem Träger (18a, 18b) zugeführt wird, und deren Endpunkt durch die Stelle gebildet wird, an der der Zweig durch die VISION-Anlage (62a, 62) ausgewertet wird,
und die Trennvorrichtung (28), die aufgrund der von der VISION-Anlage (62a, 62b) erhaltenen Information gesteuert wird, einen Reduktions- und Klemmmechanismus (44) aufweist, der sowohl in einer senkrechten als auch in einer waagerechten Ebene verstellt werden kann und den ausgewerteten Zweig zunächst auf einer niedrigen Höhe mit Bezug auf die Achsel und dann auf einer höher gelegenen Höhe mit Bezug auf die Achsel abtrennt.

2. Vorrichtung nach Anspruch 1,
**gekennzeichnet durch**
zwei divergierende Transportbahnen, deren Ausgangspunkte jeweils zusammenfallen und deren Endpunkte die VISION Auswerte- und Abtrennposition definieren.

3. Vorrichtung nach Anspruch 2,
**dadurch gekennzeichnet,**
**dass** jede Auswerteposition mit einer zugeordneten VISION-Anlage kombiniert ist.

4. Vorrichtung nach Anspruch 3,
**gekennzeichnet durch**
eine zwischen den Auswertepositionen angeordnete zweiseitige Beleuchtungsstation.

5. Vorrichtung nach den Ansprüchen 2-4,
**gekennzeichnet durch**
eine vor der Transportbahn oder -bahnen verlaufende Zufuhrbahn zum Zuführen einzelner Zweigstützen, auf denen zu bearbeitende Zweige gelagert sind, und eine im Wesentlichen parallel zu dieser verlaufende Abfuhrbahn zum Abtransport von leeren Zweigstützen, wobei die Bahnen an der Stelle einer Darreichposition über eine Umladebahn miteinander verbunden sind.

6. Vorrichtung nach den Ansprüchen 1-5,
**dadurch gekennzeichnet,**
**dass** eine Zweigstütze durch ein die Form einer Vase aufweisendes Gefäß gebildet ist, in welches ein zu bearbeitender Zweig eingesetzt werden kann und welches mit Mitteln zu dessen Verbindung mit der Zufuhr-/Abfuhrbahn und der Umladebahn versehen ist.

7. Vorrichtung nach Anspruch 6,
**dadurch gekennzeichnet,**
**dass** jedes die Form einer Vase aufweisendes Gefäß auf einer Grundplatte aufliegt, welche auf der jeweiligen Bahn geführt werden kann.

8. Vorrichtung nach den Ansprüchen 6-7,
**dadurch gekennzeichnet,**
**dass** jedes Gefäß im Abstand zu seiner unteren Kante unterhalb derselben mit einem Abstützmittel für die untere Kante einer Schutzabdeckung versehen ist, die nach unten weiter wird und an der Stelle der Darreichposition auf einem festen Abstützmittel aufliegt, wobei in dieser Darreichposition eine Grundplatte des Gefäßes auf einem Hebeelement aufliegt, welches gesteuert nach oben und nach unten bewegt werden kann und mit dem das obere Ende des Gefäßes in die Schutzabdeckung eingeführt werden kann.

9. Vorrichtung nach den Ansprüchen 6-7,
**dadurch gekennzeichnet,**
das jeder Zweigträger eine Schutzabdeckung trägt, welche gesteuert nach oben und nach unten bewegt werden kann, zur Greiferachse koaxial angeordnet ist und in seiner untersten Position mit dem oberen Ende eines in der Darreichposition befindlichen die Form einer Vase aufweisenden Gefäßes zusammenwirkt.

10. Vorrichtung nach den Ansprüchen 1-9,
**dadurch gekennzeichnet,**
**dass** der Reduktionsmechanismus auf dem ersten senkrecht verstellbaren Ende eines Tragarms angeordnet ist, wobei dessen zweites Ende in seinem Winkel hinsichtlich eines Bezugspunkts um eine im Wesentlichen senkrechte Achse verstellbar ist.

11. Vorrichtung nach Anspruch 2,
**dadurch gekennzeichnet,**
**dass** die Längsposition des Tragarms verstellbar ist.

12. Vorrichtung nach den Ansprüchen 10-11,
**dadurch gekennzeichnet,**
**dass** der Reduktionsmechanismus zwei aufeinander zulaufende Arme aufweist, welche sowohl hinsichtlich ihrer Winkelposition zueinander als auch hinsichtlich ihrer Winkelposition um eine waagerechte Achse verstellbar sind, wobei am Ende des einen Arms ein Trennelement und am Ende des anderen Arms ein mit diesem zusammenwirkendes Widerlager vorgesehen ist.

13. Vorrichtung nach Anspruch 12,
**gekennzeichnet durch**
einen spitzen zentrierenden Vorsprung, der am Ende des das Trennelement tragenden Arms angeordnet ist und senkrecht zu dessen Schneide steht.

## Revendications

1. Dispositif pour la séparation mécanique de boutures d'une branche (de plante), comprenant :
un support (18a, 18b) pour la branche qui doit être traitée,
une piste de transport (16a, 16b), qui interagit avec celui-ci, pour présenter une branche qui est supportée par un support (18a, 18b) à :
une unité d'imagerie VISION (62a, 62b) pour déterminer la position d'une aisselle avec une branche latérale d'une branche présentée par rapport à une référence et pour transmettre cette information représentative d'une position à :
un dispositif de séparation (28) pour séparer une bouture par une coupe à travers la branche à une distance prédéterminée de l'aisselle et pour libérer la bouture qui a été séparée de cette manière à une position prédéterminée,
**caractérisé en ce que**
la piste de transport (16a, 16b) est une piste finie avec, en tant que point de départ, l'emplacement où la branche est présentée au support (18a, 18b) et, en tant que point de fin, l'emplacement où la branche est examinée par l'installation VISION (62a, 62b)
et le dispositif de séparation (28), qui est commandé sur la base de l'information fournie par l'installation VISION (62a, 62b), comprend un mécanisme de réduction et de serrage (44) qui peut être réglé à la fois dans un plan vertical et dans un plan horizontal et qui sépare la branche examinée initialement à un niveau inférieur par rapport à l'aisselle et ensuite à un niveau supérieur par rapport à l'aisselle.

2. Dispositif selon la revendication 1, **caractérisé par** deux pistes de transport divergentes, dont les points de départ respectifs coïncident et dont les points de fin définissent une position d'examen par l'installation VISION et de coupe .

3. Dispositif selon la revendication 2, **caractérisé en ce que** chaque position d'examen est combinée avec une installation VISION dédiée.

4. Dispositif selon la revendication 3, **caractérisé par** un poste d'éclairage de deux côtés agencé entre les positions d'examen.

5. Dispositif selon les revendications 2 à 4, **caractérisé par** une piste d'alimentation, qui passe devant la piste ou les pistes de transport, pour des supports de branche individuels supportant des branches qui doivent être traitées, et une piste de décharge, qui est sensiblement parallèle à celle-ci, pour les supports de branche vides, lesquels pistes sont reliées les unes aux autres par une piste de transfert à l'emplacement de la position d'offre.

6. Dispositif selon les revendications 1 à 5, **caractérisé en ce qu'**un support de branche est formé par un réceptacle en forme de vase, dans lequel une branche qui doit être traitée peut être placée, et est pourvu de moyens pour l'accoupler à la piste d'alimentation/décharge et à la piste de transfert.

7. Dispositif selon la revendication 6, **caractérisé en ce que** chaque réceptacle en forme de vase est supporté par une plaque de base qui peut être guidée sur la piste respective.

8. Dispositif selon les revendications 6 à 7, **caractérisé en ce que** chaque réceptacle est pourvu, à une certaine distance au-dessous de son bord inférieur, de moyens de support pour le bord inférieur d'un couvercle de protection qui s'élargit vers le bas, reposant, à l'emplacement de la position d'offre, sur des moyens de support fixes, à laquelle position d'offre, une plaque de base de réceptacle repose sur un élément d'élévation qui peut être élevé et abaissé d'une manière contrôlée et au moyen duquel l'extrémité supérieure du réceptacle peut être déplacée dans le couvercle de protection.

9. Dispositif selon les revendications 6 à 7, **caractérisé en ce que** chaque support de branche supporte un couvercle de protection qui peut être élevé et abaissé d'une manière contrôlée, est coaxial à l'axe du dispositif de préhension et, dans sa position la plus basse, interagit avec l'extrémité supérieure d'un réceptacle en forme de vase qui est situé à la position d'offre.

10. Dispositif selon les revendications 1 à 9, **caractérisé en ce que** le mécanisme de réduction est agencé sur la première extrémité ajustable verticalement d'un bras de support, dont la deuxième extrémité peut être réglée angulairement, autour d'un axe sensiblement vertical, par rapport à une référence.

11. Dispositif selon la revendication 2, **caractérisé en ce que** la position longitudinale du bras de support est ajustable.

12. Dispositif selon les revendications 10 à 11, **caractérisé en ce que** le mécanisme de réduction comprend deux bras convergents qui peuvent être réglés à la fois en ce qui concerne leur position angulaire l'un par rapport à l'autre et en ce qui concerne leur position angulaire autour d'un axe horizontal, avec, à l'extrémité d'un bras, un élément de coupe et, à l'extrémité de l'autre bras, une butée qui interagit avec celui-ci.

13. Dispositif selon la revendication 12, **caractérisé par** une protubérance pointue de centrage qui est agencée à l'extrémité du bras qui supporte l'élément de coupe et qui forme un angle droit avec le bord de coupe de celui-ci.
